Europäisches Patentamt

European Patent Office

Office européen des brevets

(11) Publication number: **0 240 277**
A2

# (12) EUROPEAN PATENT APPLICATION

(21) Application number: 87302716.3

(22) Date of filing: 30.03.87

(51) Int. Cl.³: **G 06 K 7/10**

(30) Priority: 31.03.86 JP 46159/86

(43) Date of publication of application:
07.10.87 Bulletin 87/41

(84) Designated Contracting States:
DE ES FR GB IT

(71) Applicant: KABUSHIKI KAISHA SIGMA
32-3 Seijo 9-Chome
Setagaya-Ku Tokyo(JP)

(72) Inventor: Yamaguchi, Tadamichi
3-874, Kohan
Higashi-Yamato-Shi Tokyo-To(JP)

(74) Representative: Fry, Alan Valentine
FRY HEATH & CO. Seloduct House 16-18 Station Road
Redhill Surrey RH1 1NF(GB)

(54) Photosensor.

(57) A photosensor has an optical fiber bundle (2) comprising a plurality of optical fibers (3), one end (2b) of which is spreadly arranged in a row opposite to a surface of an object to be detected and the other end (2a) of which is bundled in a small area corresponding to the photo-sensing portion (6a) of a photoelectric conversion element (6). Accordingly, an area, to be detected, of the object can be widely selected in spite of using a conventional phototransistor.

F I G. 1

PHOTOSENSOR

BACKGROUND OF THE INVENTION

The present invention relates to a photosensor, and more particularly to a photosensor in which bank notes, sheets or the like can be identified with a high sensitivity as compared with conventional photosensors.

The photosensors of the type described above are, for instance, incorporated into an automatic tellers machine such as a money exchanging machine, a cash dispenser and an automatic depositing machine.

In general, each of the photosensors for identifying bank notes in an automatic tellers machine is composed of a phototransistor which has, at its end, a small circular photo-sensing portion of about two millimeters in diameter. A bank note to be detected or identified is placed opposite to the photo-sensing portion of the phototransistor and the phototransistor identifies a certain band-like area of the bank note by receiving light rays transmitted through the bank note or light rays reflected directly from the bank note.

However, as the diameter of the phototransistor is very small, the area, to be detected, of the bank note is much restricted. Accordingly, the sensing ability of the phototransistor is not so high as to identify very elaborate patterns of the bank note.

There exist CCD cameras with a high sensitivity, capable of identifying very elaborate patterns of a bank note. However, every CCD camera is so expensive that the total cost of a device in which the CCD camera is provided rises.

## SUMMARY OF THE INVENTION

It is an object of this invention to provide a photosensor capable of identifying objects to be detected such as bank notes accurately without increasing the total cost of a device into which the photosensor is incorporated.

According to this invention there is provided a photosensor comprising: (a) an optical fiber bundle having a plurality of optical fibers, one end of which is widely arranged in a configuration corresponding to an object to be detected and the other end of which is bundled to form a small light emitting surface; and (b) a photoelectric conversion element having a photo-sensing portion opposed to the other end of the optical fiber bundle in order to generate an electric output signal correspoding to the intensity of light rays received by the photo-sensing portion.

The above and other objects, effects and features of the present invention will become more apparent from the following description of preferred embodiments thereof taken in conjunction with the accompanying drawings.

## BRIEF DESCRIPTION OF THE DRAWINGS

In the accompanying drawings:

Fig. 1 is a perspective view showing a photosensor of a first embodiment of this invention;

Fig. 2 is a side view of a bank note identifying device incorporating the photosensor thereinto;

Fig. 3 is a sectional view taken along the line $\text{III}-\text{III}$ in FIG.2;

Fig. 4 is a perspective view showing a photosensor of a second embodiment of this invention; and

Fig. 5 is a perspective view showing a atate wherein the phototransistor is inserted into a cylindrical cover member.

## DETAILED DESCRIPTION OF THE INVENTION

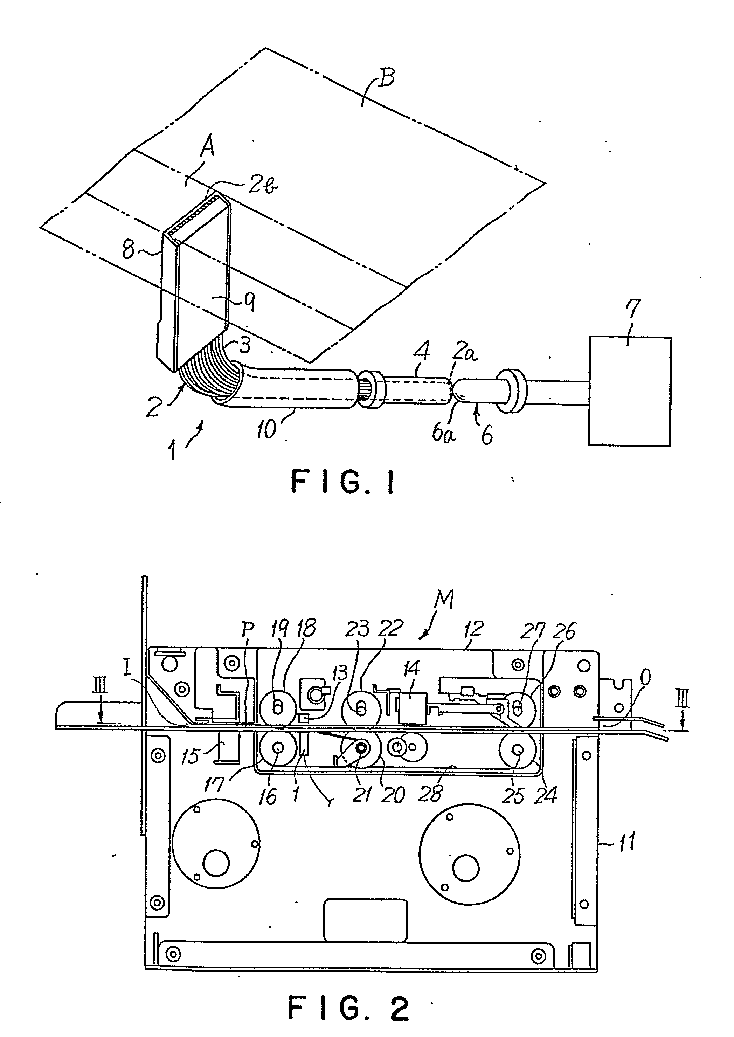

Referring first to FIG. 1, a photosensor 1 for identifying whether or not an object is genuine in an automatic tellers machine comprises an optical fiber bundle 2 having a plurality of optical fibers 3. In this embodiment,the optical bundle 2 is composed of twenty-six optical fibers 3 each of which has a diameter of 0.28 milimeters.

The optical fiber bundle 2 is inserted into a cylindrical cover member 4 at its lower horizontal end 2a to be made into a circle in cross section thereby to form a small light-emitting surface opposed to the circular photo-sensing portion 6a of a photoransistor 6. The phototransistor 6 as a photoelectric conversion element generates an electric output signal corresponding to the intensity of light rays received by

The photo-sensing portion 6a. The phototransistor 6 is connected to a control device 7 functioning to distinguish genuine bank notes from false bank notes.

The upper vertical end 2b of the optical fiber bundle 2 is arranged in a flat shape in which a plurality of optical fibers 3 are disposed in a straight row perpendicular to a direction in which a bank note B as an object to be detected or identified is transferred. The fibers 3 in a straight row detect a wide band-like area A of the bank note B when the bank note B is transferred in the direction perpendicular to the arranging direction of the upper vertical end 2b of the optical fiber bundle 2.

In this photosenser 1, the bundle 2 is spread laterally at its one end 2b in order to receive light rays in a wide range and is get together in a circle in cross section to oppose to the photo-sensing portion 6a with a small diameter, of the phototransister 6. Accordingly, a wide range of the bank note B can be detected by a conventional phototransistor with a small diameter.

The vertical end 2b of the optical fiber bundle 2 is arranged so as to be interposed between a metal housing member 8 having a channel-like shape and a plastic cover member 9 engaged with the housing member 8. The optical fiber bundle 2 passes through a flexible tube 10 between the housing member 8 and the cylindrical cover member 4.    The tube 10 can protect the bundle 2.    In this embodiment, the horizontal end 2a of the optical fiber bundle 2 forms a light-emitting surface while the vertical end 2b forms a light-receiving surface.    The photo-sensing portion 6a receives light rays emitted from the upper end 2a of the bundle 2 and the phototransister 6 outputs a signal correspoding to a total intensity of the light rays emitted therefrom, that is, the total intensity of light rays received by the vertical end 2b of the bundle 2.

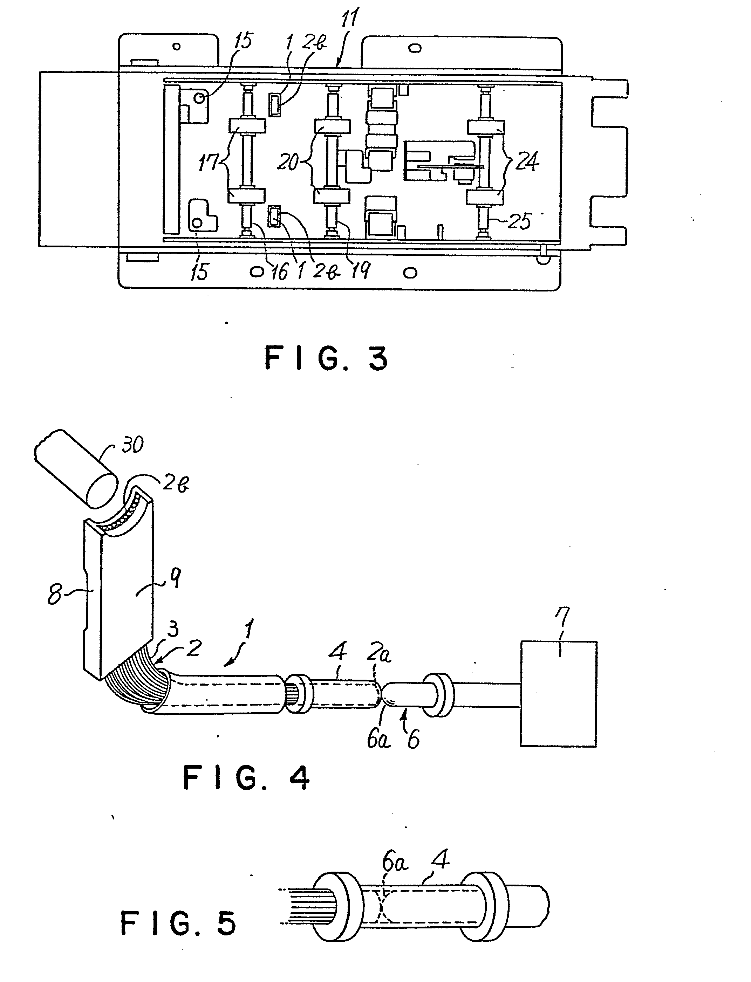

FIGS. 2 and 3 show a bank note identfying device M incorporating the photosensor 1 thereinto.    The device M is provided in an automatic tellers machine.    The bank note identifying device M comprises a main unit 11 into which a pair of photosensors 1 are incorporated at an under position of a bank note passage P.    An upper unit 12 is mounted on the main unit 11.    A bank note inlet I is formed at one end of the bank note passage P.    The upper unit 12 is pivotably connected to the main unit 11 at its longitudinal end.    When jamming of bank notes occurs, the jamming is removed by opening the upper unit 12 thereby to facilitate the maintenance of various elements provided in the device M .

As shown in FIG.3, on both sides of the main unit 11 with respect to the center line of the transferring direction of bank notes are disposed a pair of photosensors 1, 1 each having the optical fiber bundle 2. The light-receiving end 2b of each optical fiber bundle 2 described above extends perpendicularly to the transferring direction of the bank notes and is opposed to the bank note passage P. The two photosensors are respectively disposed at two positions where elaborate patterns 1 prited on the bank note B pass.

At a position opposed to each light-receiving end 2b in the upper unit 12 is provided a phototransistor 13 for emitting light rays such as infrated rays. The light rays emitted from the phototransistor 13 transmit partly through the bank note B to be indentified. The light-receiving end 2b of each optical fiber bundle 2 receives the transmitted light rays.

In addition to the two photosensors 1, a pair of magneticsensors 14, 14 are disposed ( only one magneticsensor is shown in FIG 2 ). The magneticsensors 14 detect magnetic substances contained in patterns printed on the surface of the bank note B.

Adjacent to the bank note inlet I are provided a pair of sensors 15, 15 each made of a photosensor or a microswitch which detects the insertion of bank notes B into the bank note identifying device M . Between the sensors 15 and the photosensors 1 in the main unit 11 is provided a driving shaft 16 which is rotated in the clockwise direction in FIG. 2 by a driving means such as a motor ( not shown in FIGS 2 and 3). The driving shaft control device 7 when the sensor 15 detects the forward end of an inserted bank note B. The driving shaft 16 has two driving rollers 17, 17 projecting sligtly into the passage P.

Two driven rollers 18, 18 respectively engaged with the driving rollers 17, 17 are rotatably carried by a supporting shaft 19 mounted on the movable unit 12. The bank note B having contacted the driving rollers 17, 17 is delivered forward.

Furthermore,between the photosensors 1 and the magneticsensors 14 are provided two driving rollers 20, 20 supported by a shaft 21 and two driven rollers 22 supported by the shaft 23 which are disposed in the same relative relation as the driving rollers 17 and the driven rollers 18, respectively. Further, adjacent to a bank note outlet O formed at the right end of the passage P are provided two driving rollers 24 supported by a shaft 25 and two driven rollers 26 supported by a shaft 27 which are disposed in the same relative relation as the driving rollers 17 and the driven rollers 18,respectively. The driving rollers 17, 20, 24 are coupled by an endless belt 28 so that all driving rollers 17, 20, 24 can rotate simultaneously by only one driving means such as a motor.

The operation of the bank note identifying device M will now be described.

First, a bank note B is inserted into the passage P

from the inlet I.    When the sensor 15 detects the forward end of the bank note B, the driving rollers 17 are rotated to transfer the bank note B toward the driving rollers 20.    During this transference, the photosensors 1 detect whether or not the bank note B is genuine.    Thereafter, the bank note B is transferred toward the driving rollers 24 to be detected by the magneticsensors 14.    Then, the bank note B is discharged from the outlet O by the driving rollers 24 and the driven rollers 26.

The photosensor 1 detects the bank note B in the following manner.

The light rays emitted from each light emitting element 13 transmit through the bank note B partly and each light-receiving end 2b of the optical fiber bundle 2 receives the light rays transmitted through the bank note B .    The light rays received by the light-receiving end 2b pass through each fiber 3 to reach the light-emitting end 2a.    Then the light rays emitted from the light-emitting end 2a are received by the phototransistor 6.    The phototransistor 6 generates an electric output signal corresponding to the intensity of light-rays received by its photo-sensing portion 6a. The electric output signal of the phototransistor 6 is delivered to the control device 7.    The control device 7 judges whether the bank note B is genuine or false in such a manner that both signals from the phototransistor 1 and the magneticsensor 14 are compared with a reference pattern, respectively.

In the above embodiment, the light-emitting element 13 may be provided under the passage P in such a manner that light rays reflected on the surface of the bank note B can be received by the light-receiving end 2b of the bundle 2.

FIG. 4 shows another embodiment of a photosensor according to this invention. In this embodiment, the light-receiving end 2b of the optical fiber bundle 2 is arranged in an arc row corresponding to an object with a curved surface to be detected such as a column 30. Further, as shown in FIG. 5, the one end 2a of the bundle 2 may be extended to an intermediate position of the cover member 4 while the phototransistor 6 may be inserted into the cover member 4 so as to oppose to the one end 2a of the bundle 2 in the cover member 4. The phototransistor 6 has a base plate 6b which contacts the distal end of the cover member 4 when the phototransistor 1 is inserted thereinto.

As stated above, according to the present invention, since one end of the optical bundle 2 is arranged widely in a configuration corresponding to an object to be detected while the other end thereof is get together so as to oppose to a photoelectric conversion element, an wide area of an object can be detected by a small conventional photoelectric conversion element.

Consequently, the photosensor 1 has a higher sensitivity and is capable of identifying very elaborate patterns of the objects such as bank notes in spite of low cost.

CLAIMS:

1. A Photosensor for detecting a surface of an object, comprising a light-emitting element for emitting light rays and a photoelectric conversion element which receives light rays transmitted through the object to be detected or light rays reflected from the object thereby to generate an electric output signal corresponding to the intensity of light rays received by a photo-sensing portion of the photoelectric conversion element, characterized in that an optical fiber bundle (2) provided between the object (B) and the photoelectric conversion element (6) in such a manner that one end (2b) of the bundle (2) is widely arranged in a configuration corresponding to the object (B) and the other end (2a) of which is bundled to form a small light-emiting surface opposite to the photo-sensing portion (6a) of the photoelectric conversion element (6).

2. A photosensor according to claim 1, wherein said one end (2b) of the optical fiber bundle (2) is flatly arranged in a straight row perpendicular to a direction in which the object (B) is transferred in order to detect a flat object such as a bank note.

3. A photosensor according to claim 1, wherein said one end (2b) of the optical fiber bundle (2) is arranged in an arc shape on a plane perpendicular to a direction in which the object (B) is transferred in order to

4. A photosensor according to claim 1, wherein the other end (2a) of the bundle (2) is get together into a cylindrical cover member (4) to form the small light-emitting surface correspoding to the photo-sensing portion (6a) of the photoelectric conversion element (6).

5. A photosensor according to claim 4, wherein the other end (2b) of the bundle (2) is extended to an intermediate position of the cover member (4), the photo-sensing portion (6a) of the photoelectric convertion element (6) being inserted into the cover member (4) so as to oppose to the other end (2a) of the bundle (2) in the cover member (4).

F I G. 1

F I G. 2

FIG. 3

FIG. 4

FIG. 5